# EUROPEAN PATENT SPECIFICATION

(11) **EP 3 077 719 B1**
(45) Date of publication and mention of the grant of the patent: **10.04.2019**
(21) Application number: 14805636.9
(22) Date of filing: 02.12.2014
(51) Int. Cl.: F17C 6/00

(54) **"DEVICE AND METHOD FOR DISPENSING CRYOGENIC GASES"**
VORRICHTUNG UND VERFAHREN ZUR AUSGABE KRYOGENER GASE
DISPOSITIF ET PROCÉDÉ DE DISTRIBUTION DE GAZ CRYOGÉNIQUE

(30) Priority: 02.12.2013 EP 13195380
(43) Date of publication of application: 12.10.2016
(73) Proprietor: SOL S.p.A., 20900 Monza (MB) (IT)
(72) Inventor: VALTOLINA, Daniele, I-23896 Sirtori (LC) (IT); SANTINI, Fabio, I-26040 Bonemerse (CR) (IT)
(74) Representative: Gislon, Gabriele
(86) International application number: PCT/EP2014/076322
(87) International publication number: WO 2015/082505

(56) References cited:
- EP-A1- 2 169 294
- US-A- 5 913 344
- US-A1- 2003 051 766
- US-B1- 6 609 381

## Description

The present invention relates to a device for dispensing cryogenic gases, namely to a device for transferring cryogenic liquid gases from one container to another. More specifically, the present invention relates to a device for transferring a measured amount of a cryogenic liquid gas, such as e.g. nitrogen, argon, hydrogen or oxygen, from a pressurized reservoir or vessel to a non-pressurized portable container. Cryogenic liquids are typically stored in pressurized reservoirs that are thermally insulated. The partial evaporation of the liquid gas results in building a pressure within the reservoir that enables transfer from the reservoir to smaller containers. The smaller containers are used to carry a limited amount of cryogenic liquid gas, usually nitrogen, to the final use e.g. in a laboratory or hospital where the fluid is requested. The smaller containers used for transport are Dewar vases, also called "research Dewars", that are in the form of thermally insulated Beckers, usually provided with a lid, that can be transported by a person. As is well known, these containers are not pressurized; they are usually made with an insulated lid and with a wide mouth for easy access during the filling step. It is also known to transfer liquid gas into intermediate vessels from which the liquid is manually poured into the above mentioned smaller containers, e.g. the Dewars, for final use. Nitrogen is the most commonly used liquid cryo-gas. The filling step is carried out at ambient pressure, i.e. the Dewars are open and the cryogenic liquid gas is poured from a reservoir into a Dewar vase that is (necessarily, being open to the atmosphere) at ambient pressure. In other words, in the filling step the cryogenic liquid gas comes into contact with the atmosphere.

Thus, presently known techniques for dispensing cryogenic gases, in particular liquid nitrogen, into research Dewars or similar portable containers, are manual and involve spilling or pouring liquid gas in a container. Many of these procedures involving the use of liquid nitrogen can produce splashes, especially when spilling from medium-sized pressurized vessels; splashes of liquid nitrogen may cause burnings to a user handling the vessel, and if they reach the eyes they will cause serious injuries. Additionally, gas coming from liquid nitrogen that evaporates during the dispensing of the same can cause asphyxia in a small room without adequate ventilation. Moreover, the intermediate vessels, from which the liquid gas is transferred to the research Dewars, are usually not able to withstand pressure. This results in a possible danger to the user. If the intermediate vessels are closed, e.g. by means of a lid, to reduce evaporation, a pressure is applied within these containers which is slightly above the atmospheric pressure. As a result, the lid, subject to the action of said pressure, may be shot off its position, opening the container and possibly hitting the user.

US 2005/0274127 discloses a mobile system for dispensing nitrogen to a use point. The system has a bulk tank, a sump and a dispensing hose. Nitrogen gas generated in the dispensing step is recycled into the system. This device is suitable for big containers only and is costly and complex to manufacture.

US 2003/0051766 discloses a mobile system for filling cylinders with pressurized LPG. The system includes a station comprising a scale and a flow meter, to measure the amount of propane delivered to the cylinder. A pump pressurizes the gas, in order to deliver it in liquid form. This system is complex, as it involves means to pressurize the gas, and means to deliver it in a pressurized container. Moreover, the system of US'766 is not suitable to operate with gas at low temperatures, nor with gas that evaporate from the receiving container: i.e. the system of US'766 cannot be used for transferring liquid cryogenic gases in portable containers.

It is an aim of the present invention to improve the known method of dispensing liquid cryogenic gases, especially liquid nitrogen, without using complex and expensive systems, to fill non-pressurized portable containers such as the research Dewar vases above mentioned.

The present invention solves the above problems and provides a dispensing device for liquid cryogenic gases, characterized according to claim 1. Another object of the invention is a dispensing method according to claim 9. Preferred aspects are recited in the dependent claims. A further object of the invention is a non-transitory data medium according to claim 16.

In particular, a device for dispensing liquid cryogenic gases according to the invention comprises a source of liquid cryogenic gas and a means to feed the liquid cryogenic gas to a receiving container that is a non-pressurized container, i.e. an open container at ambient pressure, whereby the liquid cryogenic gas exits the source into the ambient air and is collected into a receiving container. In other words, during the step of filling the liquid gas to the container, the means to feed the liquid gas the container are separate, i.e. physically detached, from the said container in which the liquid gas is collected.

The device further comprises a closable chamber to house the receiving container, means of measuring the amount of liquid cryogenic gas in the receiving container and control means for controlling the feeding of liquid cryogenic gas to the receiving container.

As mentioned, the dispensing device comprises means to dispense cryogenic gas substantially at ambient pressure. With "dispensing at ambient pressure" it is meant that the liquid gas dispensed and collected into the receiving container is at a pressure which is the pressure within the closable chamber, i.e. standard ambient pressure of about 1 atm..

In other words, the cryogenic gas is delivered to a non-pressurized container.

The non-pressurized container may be a Dewar vase, as mentioned, or, in general, a thermally insulated container, which is open, or closed by a lid (or similar closing means) in a non air-tight manner.

In the present description, the terms "pressurized" and "non-pressurized" are referred to the ambient pressure. As a result, "pressurized" means a pressure above ambient pressure, while "non-pressurized" means a pressure equal to the ambient pressure. In particular, "non-pressurized" does not mean vacuum.

According to a preferred aspect of the present invention, the measuring means of the liquid cryogenic gas comprises a scale, which is preferably housed in the closable chamber; the Dewar container is positioned on the scale during the dispensing step and the feeding of the cryogenic liquid gas to the container is stopped once the required amount has been measured as weight by the scale.

There may be more than one scale in the device of the present invention, e.g. to be able to dispense to both small and big receiving containers.

As previously mentioned, the cryogenic gas is delivered to the receiving container in liquid form, at substantially ambient pressure. As a result, part of the cryogenic liquid gas evaporates in the closable chamber.

According to a preferred aspect of the present invention, the chamber comprises a sensor for detecting the concentration of oxygen. If the concentration of oxygen goes below an oxygen threshold value, because of the evaporation of the cryogenic gas from the receiving container, the chamber may be vented to restore a breathable ambient within the chamber. This fact prevents the user to be exposed to a low oxygen concentration ambient, once the feeding of the liquid cryogenic gas from the source to the gas is finished, and the user opens the chamber to remove the filled container.

According to a further preferred aspect of the invention, the chamber comprises a sensor for detecting the temperature within the chamber. Among others, the temperature sensor may sense the occurrence of spilling from the container. Advantageously, the temperature sensor may sense the temperature of the surface on which the container is placed. If, during dispensing of the liquid cryogenic gas to the container, liquid cryogenic gas spills from the container itself, and drops onto the mentioned supporting surface, the temperature sensor immediately senses the presence of low temperature generated by the liquid cryogenic gas, and the device may stop the dispensing operation.

According to an aspect of the invention, there are at least two different sources of cryogenic gas and/or two receiving containers and closable rooms for said two containers. Thanks to this fact, it is possible to fill small or large receiving containers. As an example, the dispensing device may be provided with a first source housed in the device (e.g. a liquid gas cylinder, also known as liquid cylinder), and a second source comprising a fluidic connection to an external container or pipeline. The first internal source may be used to fill small receiving containers of e.g. 300 ml; the second source may be used to fill larger receiving containers (e.g. up to 50L) and/or the first source.

In the present description and claims it is understood that the receiving container is a non-pressurized container open to the atmosphere and held at ambient pressure, especially in the filling step; if a lid is present, it does not prevent gases to exit the container holding cryogenic liquid gas.

According to another preferred aspect of the invention, the feeding means comprises a nozzle which is movable, preferably vertically, within the chamber. The position of the nozzle is selected according to the size of the container and/or according to the amount of liquid gas to be dispensed. Before starting to fill the portable container, the nozzle may be lowered within the container itself, in order to minimize the risk of splashing of the liquid gas; the preferred filling position of the nozzle is such that the nozzle becomes immersed in liquid gas during the feeding step and remain immersed until said step is finished.

The invention provides several advantages over the prior art.

Thanks to the present invention, the user does not directly handle the source of liquid cryogenic gas, and he can't be injured in the process of transferring the liquid gas from the source to a container. In addition, there are no spills or splashes of cryogenic liquid gas during the dispensing step.

Moreover, as the device is provided with a measuring means, a precise amount of liquid gas can be delivered to the container from the source, thus avoiding waste of the product; additionally, this information helps in knowing or estimating how much liquid cryogenic gas is left in the container for maintenance reasons.

The cryogenic liquid gas is delivered from a pressurized source to a non-pressurized container. As a result, the feeding means do not require to be provided with means for moving and/or pressurizing the gas (e.g. a pump). When the pressurized source is open to enable dispensing liquid gas to the non-pressurized container (or more in general it is connected with the non-pressurized closable chamber), the cryogenic liquid gas naturally flows from the source to the receiving container within the closable chamber.

The invention will now be further disclosed with reference to the enclosed drawings, that relate to exemplary and non limiting embodiments of the present invention, wherein:
- Figure 1 is a scheme of a device of the invention;
- Figure 2 is a schematic view of a part of a device of the invention and
- Figure 3 is a schematic view of an alternative embodiment of the present invention;
- Figure 4 is a schematic view of a further alternative embodiment of the present invention.

With reference to the figures, a device 1 according to the present invention comprises a source 2 of liquid gas 7 and a means 3 to feed said liquid cryogenic gas to a receiving container 4. The device 1 is further provided with a closable chamber 5 to house the container 4, measuring means 6 to measure the amount of cryogenic liquid gas 7 present in the receiving container 4 and control means 8 for controlling at least the feeding of liquid gas 7 to the receiving container 4.

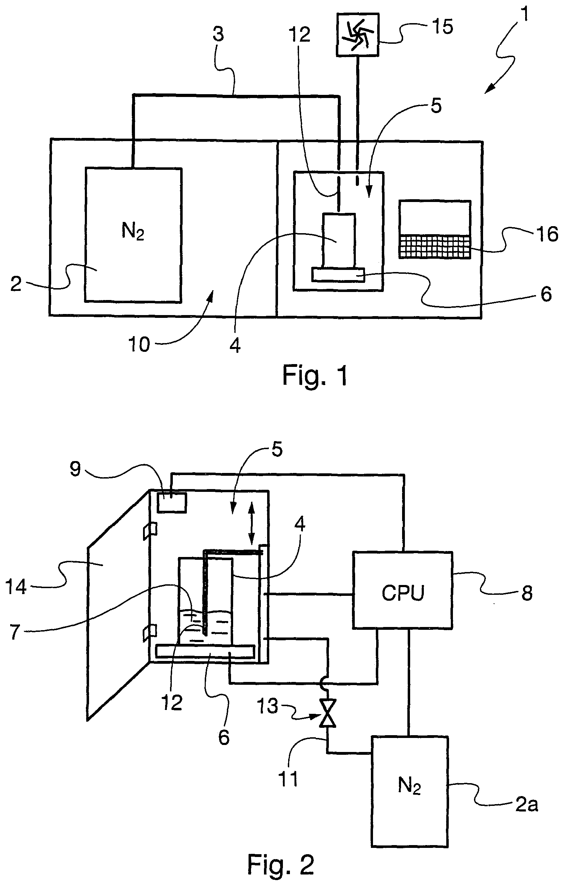

The source 2 of liquid gas 7 can be any source known in the art. As an example it may be a pressurized tank or vessel such as a liquid gas cylinder (fig.1); the device 1 may thus be provided with a closed housing 10 for storing said vessel. The housing 10 of the liquid gas cylinder is independent from the closable chamber 5 where the receiving container 4 is placed to be filled with cryo-gas; in fact, it is important that chamber 5 can be closed and isolated from the environment so as to contain any nitrogen gas that is generated in the dispensing step, preventing the same to be dispersed in the surrounding ambient.

In the exemplary embodiment of fig. 1, housing 10 for the liquid gas cylinder or vessel 2 is provided laterally to the main body of device 1, that comprises chamber 5. In another preferred embodiment (not shown), housing 10 is positioned below the main body; in both cases the housing and the main body are in one piece, or constrained or attached together to provide a single device. Alternatively, the source 2 of liquid gas may be a feeding line 11 connected to an external pressurized tank 2a of cryogenic liquid gas and entering the device 1, as visible in fig. 2.

In general, the source 2 can be any means apt to provide cryogenic liquid gas within the device 1.

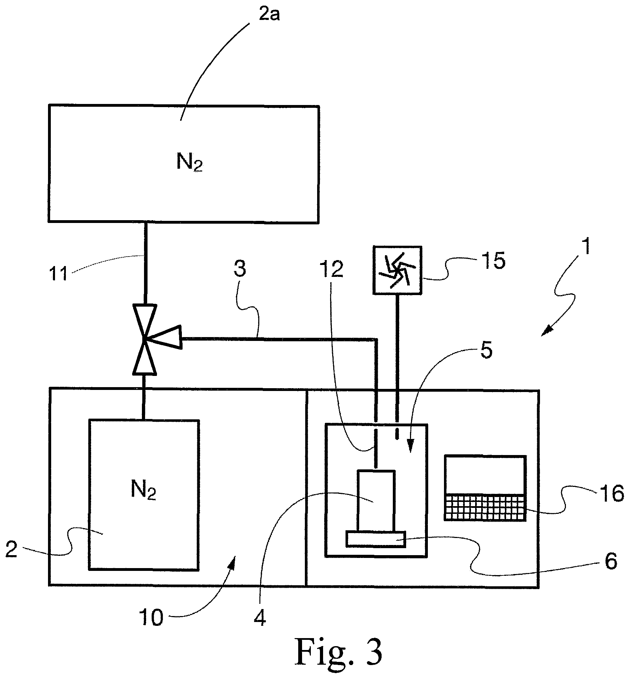

According to a further embodiment, shown in Fig. 3, the dispensing device 1 may be provided with a liquid gas cylinder 2 and a feeding line 11 connected to an external tank 2a. In this embodiment, the external tank 2a may fill the liquid gas cylinder 2 and/or the container 4.

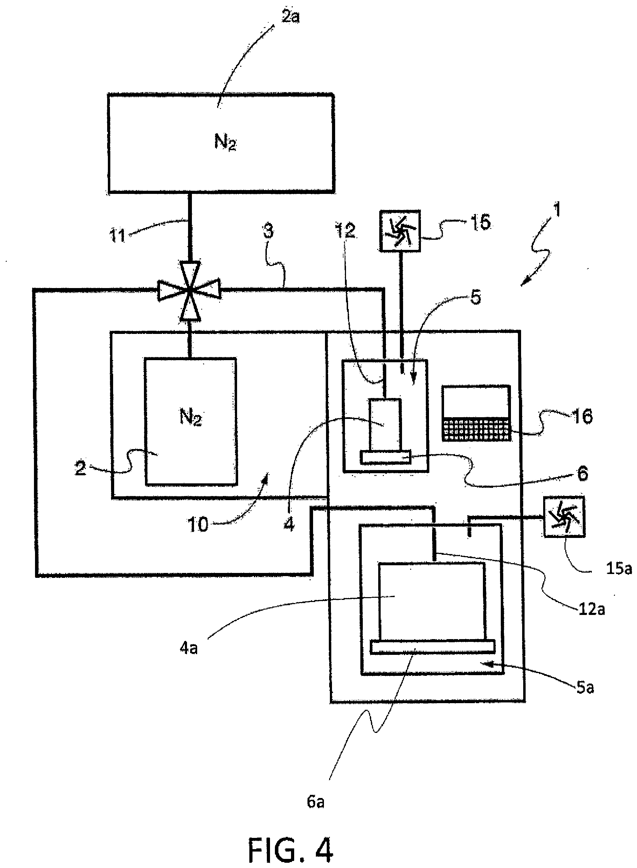

Fig. 4 shows an embodiment where there are two closable chambers 5, 5a for two receiving containers 4, 4a, a small and a large container respectively, that are fed by one or two sources 2, 2a. The first closable chamber 5 is equal to the closable chamber of the embodiments previously disclosed. The second closable chamber 5a, housing the large container 4a, is provided with the same means of the closable chamber 5. In figure 4, among others, a nozzle 12a, a scale 6a and venting means 15a are shown.

The feeding means may be provided with a valve 13 for opening/closing fluidic communication with the source 2. Otherwise the source itself may be provided with a valve. The control means 8 typically is a CPU or similar logic unit that includes a memory portion, either internal or external to the control means.

Thanks to the difference between the pressure of the pressurized source(s) 2, 11 and the non-pressurized receiving container 4, the opening of the valve 13 causes the flow of the cryogenic gas from the source(s) 2, 11 to the receiving container. In other words, there is no need to provide a pump, or a similar means, to force the flow of the cryogenic gas from the source(s) 2, 11 to the receiving container 4.

The memory portion is provided with a non-transitory data medium, suitable to be read by a computer and/or logic unit such as control means 8; said medium is comprising instructions that, once read by a logic unit of a device according to invention causes said device 1 to carry out at least the steps (iii) to (v) of the following steps:
(i) providing a receiving container 4 in said chamber 5, (ii) selecting an amount of cryogenic liquid gas to be delivered to said container; (iii) feeding an amount of cryogenic liquid gas from said source 2 through said feeding means 3; (iv) delivering said liquid gas from said feeding means 3 to said receiving container 4; (v) measuring the amount of cryogenic liquid gas 7 being fed to said container; (vi) interrupting said feeding of cryogenic liquid gas, after once the previously selected amount of liquid gas has been delivered to receiving container 4.

In the shown embodiment, the feeding means comprise a pipe 3, which connects the source 2 to the closable chamber 5, and a nozzle 12 that is the end portion of the pipe 3 and from which the liquid exits.

The nozzle 12 is preferably movable within the chamber 5, in a preferred embodiment the nozzle 12 is vertically displaceable within the closable chamber 5. The control means 8 may control a motor (not shown) to move the nozzle 12. As disclosed herein below, this movement allows to place the nozzle 3 within the container 4 to which liquid cryo-gas 7 is delivered, at the bottom of the container 4 itself, so as to reduce initial splashes and to become immersed during the step of dispensing the required amount of liquid to completely avoid splashes in that condition.

The nozzle 12 may be provided with more degrees of freedom within the chamber 5; as an example nozzle 12 may be horizontally displaceable, too, so as to be movable substantially above the centre of the container 4. A fixed nozzle may however be employed.

The nozzle 12 can be of different shapes known in the art. In the shown embodiment it is shaped as an "L" shaped duct. In a preferred embodiment the nozzle is provided with an element that acts as a spray damper, to avoid splashes; such element is known in the art and is made e.g. in sintered material.

The closable chamber 5 is a defined ambient within device 1, that is provided with at least one door or lid or similar closing means 14, that can be selectively opened or closed in order put the chamber in communication with the external environment, and to isolate the chamber 5 with respect to the external environment. The closing means 14 is big enough to allow (when the chamber is open) the passage of the container 4, in order to selectively let the container 4 in or out the closable chamber. In the shown embodiment the opening means is a door hinged to one side of the chamber 5.

Other forms of closing means may be used. As an example, in an alternative embodiment the closing means is a sliding lid. In general, the closing means 14 allows selectively opening and closing the closable chamber 5. Reversible fastening means, not shown, are provided in order to securely retain the closing means 14 in the closed position, in order to prevent unwanted opening of the closable chamber. A similar arrangement is preferably provided for housing 10, i.e. there is a door or similar closing means that preferably can be opened only by authorized persons and only if specific conditions have been met.

The device 1 is further provided with measuring means which are able to measure the amount of liquid gas transferred from the source 2 to the container 4. Various measuring means known in the art may be used with the present invention.

In the shown embodiment, the measuring means comprise a scale 6; scale 6 is preferably placed in the closable chamber and the receiving container, empty, is placed on the scale at the beginning of the dispensing step. By measuring the weight of the container 4 and of the liquid gas being inserted into the container, it is possible to calculate the amount of liquid gas transferred into the container 4.

In another embodiment of the present invention, if the source 2 is a tank or similar element 2a housed outside the device 1, a second scale can be placed under the chamber 5 in a second chamber below chamber 5. Furthermore, in yet another embodiment, the amount of cryogenic liquid gas 7 transferred from the source 2 to the container 4 may be measured by means of flow meters (not shown) placed on the feeding line 3 or 11.

The scale 6 placed under the container of the shown embodiment is not expensive and can provide precise measurements. A further advantage of a scale is that it can weigh the receiving container to determine its capacity: when the user requests the required amount of liquid gas, the control logic unit 8 will compare the required amount with the capacity of the inserted container 4 and will authorize dispensing said amount only if said amount corresponds to a volume consistent with the capacity of the container 4 actually present in the chamber 5.

Preferably, the chamber 5 is further provided with at least one sensor 9 to detect the concentration of oxygen within the chamber. These sensors are known in the art, and can calculate the percentage of oxygen in the chamber 5. Similar sensors may be placed also at other locations in the device 1, e.g. near the source 2 of cryogenic liquid gas.

When the percentage of oxygen in the chamber 5 (or in the area of the device 1 where oxygen sensor are placed) drops below a reference value, because of nitrogen evaporation during the dispensing step, the closing means 14 cannot be opened so that access to chamber 5 is forbidden.

Preferably the device 1 is provided with vents that can expel the air from the chamber 5 into the external environment. Preferably, the vents are connected to a duct that may transfer and deliver the air of the device filled with vapours of cryogenic gas 7 in a suitable environment. As an example such a duct may lead to the outside of the building in which the device 1 of the present invention is housed. According to an exemplary embodiment of the present invention, the closable chamber 5 may be provided with one or more temperature sensors 10. The temperature sensor may be placed anywhere in the chamber 5, but according to a preferred aspect of the invention it is placed on the surface supporting the container 4 within the chamber 5. In the shown embodiment a temperature sensor is placed on the scale 6.

The position of the temperature sensor on the surface supporting the container allows to sense if too much liquid cryogenic gas has been fed to the receiving container 4 and is spilling outside the container 4, dropping onto the surface of scale 6. The filling of the container can thus be stopped. Moreover, the temperature sensor 10 may prevent (or at least immediately stop) a dispensing of liquid gas 7 in the chamber 5 without the container having being placed in the chamber 5, or with the container 4 badly positioned within the chamber 5.

The device 1 is furthermore provided with user interface means 16 for inputting commands to the device and/or provide information to a user. These means are known in the art and may be a GUI such as a touch display, or a display provided with selectable buttons or a keyboard. In one exemplary embodiment, the display may recite a list of security questions to answers or checks that the user has to validate before dispensing of cryogenic gas is authorized by the control unit 8.

The device 1, preferably through control unit 8, may be also provided with means for verifying the nature/identity of one or more of the source 2, the user, the operator providing maintenance, etc. As an example, the source 2 may be provided with identification data, e.g. on a bar code or an RFID. The device 1 may be provided with a bar code reader apt to read the information stored on the bar code or RFID, and to authorize or deny the use of said source as a result of the reading operation. Moreover, the user and/or the operator providing maintenance to the device 1, may be provided of a means, e.g. a smart card, storing his/her identity data. The device 1 may be provided with e.g. a smart card read, or in general any means apt to recognize the user or operator. Alternatively, the user or operator may identify himself by means of the insertion of a code or password on the input means. After identification of the user/operator, access to particular functions of the device 1 may be granted or denied.

As an example, a regular user may be allowed to insert a container into the chamber 5 which may be filled with a selectable amount of liquid gas 7, but may be prevented from performing operation on the source 2, e.g. substitution of a tank acting as reservoir of liquid gas. Some particular users may be allowed to collect a maximum amount of liquid gas per unit of time, i.e. per day or per week.

Access to all the function of the device 1 may be instead granted to an authorized operator.

The operation of the device 1 is as follows.

A container to be filled, totally or partially, with liquid gas 7 is placed within the closable chamber 5. This operation is usually carried out manually, but it is not excluded that the device may be provided with a number of containers 4 that may be automatically delivered to the closable chamber.

If the device 1 is provided with identity verification means, the user has to identify himself in order to be able to open the closing means 14 and to insert the container 4, or to command the deliver of a container 4 into the closable chamber 5.

The door or closing means 14 is then closed, manually or automatically by the device 1, in order to start the dispensing step of the liquid cryogenic gas to the container 4. Once the closing means 14 are closed, the operation of delivering of the liquid gas may start.

The user then selects a desired amount of cryogenic liquid gas 7 to be delivered to the container 4. Alternatively, the device 1 may recognize the container 4 inserted into the closable chamber, e.g. by means of a bar code reader or by sensing the weight of the container 4, and it may chose automatically the amount of liquid gas 7 to be delivered to the container 4.

Moreover, if the dispensing device 1 is provided with a plurality of source(s) 2, 11, the user may select the source 2, 11 from which feeding the cryogenic gas to the container 4. Alternatively, the device may recognize the container 4 (in particular the size of the container 4), and select the most appropriate source 2, 11.

If the device 1 is provided with a movable nozzle 12, the nozzle is lowered into the container 4. In the shown embodiment the nozzle 12 is lowered down to a vertical distance of about 3.0 cm from the bottom surface of the surface supporting the container, which in this case is the scale 6.

If a particularly thick container 4 is inserted into the chamber 5, the nozzle 12 may encounter the bottom of said container before reaching the above mentioned vertical distance. In this occurrence, the device will sense that the downward run of the nozzle 12 has been interrupted, e.g. by measuring the absorption level of the motor moving the nozzle 12, and the control means 8 commands the nozzle 12 to perform a back run, in the upward direction, of a few centimetres, e.g. 2.0 cm. Moreover there can be provided a manual operation of the position of the nozzle 12, in order to let the user choose the best position for the nozzle 12.

Once the nozzle 12 is in the position suitable for delivering the fluid gas 7 to the container 4, the delivering operation begins.

As mentioned, according to a preferred solution, this operation is caused only by the difference of pressure existing between the pressurized source and the container 4 housed in the closable chamber 5.

In particular the source 2 is opened in a known way, and liquid gas 7 begins to pass through the feeding means 3 into container 4. Typically, the source 2 is pressurized, so the opening of a valve 13 on the feeding means or on the source itself puts into communication the source 2 with the container 4. The container 4 housed in the chamber 5 is open, or closed in a non air-tight manner, so that the pressure within the container 4 is substantially equal to the ambient pressure of the chamber 5. As the pressure inside the chamber 5 is lower than the pressure of the source 2, liquid gas 7 begins to flow from the latter towards the container 4.

During delivering of liquid gas 7 to the container, the amount of liquid gas fed to the container 4 is measured by the measuring means. In the shown embodiment, the scale 6 measures the weight added to the container, and thus the control means 8 can calculate the amount of liquid added to the container 4. In this step the user is not allowed to open the closing means 14. In this step, the pressure within the container 4 is the ambient pressure of the chamber 5.

The position of nozzle 12 remains unchanged during the dispensing step, so that the nozzle is eventually submersed by the incoming liquid gas 7 and remains immersed in said cryogenic liquid gas 7 during a major part of the dispensing step. Once the scale has generated a signal that the selected amount of liquid gas 7 has been delivered to the container 4, the control means 8 commands to stop the feeding of the liquid gas 7 to the container 4. In case of mobile nozzle 12, it returns to its initial position.

The cryogenic liquid gas fed to the container 4 is preferably fluidically connected with the ambient within the closable chamber 5. As a result, a portion of the cryogenic liquid gas evaporates from the container 4 and is dispersed within the closable chamber 5. The concentration of oxygen of the chamber 5 may be lowered, so that the air within the chamber 5 may become non breathable.

The logic control unit 8 will then carry out a check of the conditions within the chamber 5 by means of at least oxygen sensor 9, operating venting means 15 if necessary.

When there is a positive answer, door 14 is unblocked and the user is now allowed to access the closable chamber 5, i.e. the closing means 14 can be opened again. The container 4 filled with the desired amount of liquid gas 7 can be removed from the closable chamber 5.

During the delivering of the cryogenic liquid gas 7 to the container 4, the device 1 may perform other controls further to the measure of the amount of liquid gas 7. Thanks to the temperature sensor 10, as above mentioned, the device 1 can control that the liquid gas is not delivered or does not overflow outside the container 4. In fact, if liquid gas contacts the temperature sensor 10, the latter will sense a drop in the temperature sensed, and the control means 8 may command to interrupt the delivering of the fluid.

The oxygen sensor 9 detects the percentage of oxygen within the chamber 5. If the air inside the chamber 5 is too poor of oxygen, the control means will command to open vents and/or activate fans in order to restore the correct amount of oxygen within the chamber. As mentioned, oxygen sensor 9 may be placed even elsewhere within the device 1, and the step of controlling the amount of oxygen within the chamber 5 or other places of the device may be performed not only in the dispensing step. As an example the oxygen sensor 9 may be activated continuously, or at regular intervals.

Preferably, when the device 1 is powered off, i.e. when the air within the device can't be monitored, opening of the chamber 5, and possibly also of the device itself, is not allowed. This condition may be preferably overruled only by an operator, who e.g. owns a special key able to unlock the device 1.

In a preferred embodiment, the logic unit 8 keeps track of the amounts of liquid gas that have been dispensed and advises when the liquid gas container, i.e. the liquid gas source, has to be replaced with a full container.

## Claims

1. A device (1) for dispensing cryogenic liquid gases (7), comprising a source (2) of cryogenic liquid gas, a feeding means (3, 12) to feed a selected amount of said cryogenic liquid gas to a receiving container (4), measuring means (6) configured to measure the amount of cryogenic liquid gas in said receiving container (4), **characterized in that** said feeding means (3, 12) are configured to feed said cryogenic liquid gas to said receiving container (4) that is open and at ambient pressure; and **in that** said device further comprises:
a closable chamber (5) configured to house said receiving container (4) and at least part of said feeding means (3, 12), said measuring means (6) and control means (8) configured for controlling at least the feeding of liquid cryogenic gas to said receiving container (4) and the interrupting of said feeding of cryogenic liquid gas once the previously selected amount of cryogenic liquid gas has been delivered, the device further comprising closing means (14) for said closable chamber (5), configured to allow the passage of said receiving container (4) when said chamber (5) is open.

2. A device according to claim 1, wherein said feeding means (3, 12) are configured so that, during the step of feeding the cryogenic liquid gas to the receiving container (4), the feeding means (3, 12) to feed the cryogenic liquid gas to the receiving container (4) are physically detached from said receiving container (4).

3. A device according to claim 1 or 2, wherein said measuring means (6) of the cryogenic liquid gas comprises at least one scale.

4. A device according to claim 3, wherein said scale is housed in said closable chamber (5).

5. A device according to any previous claim, wherein said chamber (5) comprises a sensor (9) for detecting a concentration of oxygen and/or a sensor (10) for detecting a temperature within the chamber (5).

6. A device according to any previous claim, comprising means to identify said receiving container (4) and/or said source (2) of cryogenic liquid gas.

7. A device according to any previous claim, wherein said feeding means (3, 12) comprise a nozzle (12) which is movable within the receiving container (4) and the chamber (5).

8. A device according to claim 1, comprising two or more sources (2) of cryogenic liquid gas and/or two or more closable rooms (5) configured to house said receiving containers (4).

9. A method for dispensing cryogenic liquid gases to a receiving container (4), by means of a device (1) comprising a source (2) of cryogenic liquid gas, a feeding means (3, 12) to feed a selected amount of said cryogenic liquid gas to said receiving container (4), measuring means (6) configured to measure the amount of cryogenic liquid gas in said receiving container (4), **characterized in that** said receiving container (4) is an open receiving container (4) at ambient pressure, said device (1) further comprising a closable chamber (5) configured to house said receiving container (4), said measuring means (6) and control means (8) for controlling the feeding of cryogenic liquid gas to the said receiving container (4) and the interrupting of said feeding of cryogenic liquid gas once the previously selected amount of cryogenic liquid gas has been delivered, and closing means (14) for said closable chamber (5) configured to allow the passage of said receiving container (4) when said chamber (5) is open, said method comprising at least the following steps:
(i) providing a receiving container (4) in said chamber (5),
(ii) selecting an amount of cryogenic liquid gas to be delivered to said receiving container (4);
(iii) feeding an amount of cryogenic liquid gas from said source (2) through said feeding means (3, 12) to said receiving container (4), wherein said receiving container (4) is open and at ambient pressure;
(iv)measuring the amount of cryogenic liquid gas being fed to said receiving container (4);
(v) interrupting said feeding of cryogenic liquid gas, once the previously selected amount has been delivered to said receiving container (4).

10. A method according to claim 9, wherein in step iii) said feeding means (3, 12) are physically detached from said receiving container (4).

11. A method according to claim 9 or 10, wherein said feeding means (3, 12) have a nozzle (12) and wherein before said feeding step (iii), said nozzle (12) of said feeding means (3, 12) is inserted within said receiving container (4) and positioned close to the bottom of said receiving container (4).

12. A method according to any claim 9 to 11, wherein an oxygen sensor (9) controls the concentration of oxygen within the chamber (5), and said chamber (5) is vented if the concentration of oxygen inside the chamber (5) is lower than a memorized oxygen threshold value.

13. A method according to any claim 9 to 12, wherein a temperature sensor (10) controls the temperature within the chamber (5),and feeding of cryogenic liquid gas to said receiving container (4) is interrupted if the sensed temperature is lower than a memorized temperature threshold value.

14. A method according to any claim 9 to 13, wherein the closing means (14) comprise a door, and said control means (8) block the opening of the door of said chamber (5) when the detected chamber parameters are different from said memorized parameters.

15. A method according to any claim 9 to 14, wherein the control unit (8) is provided with means for verifying the nature/identity of one or more of the source (2), the user, the operator providing maintenance, and the access to the said source (2) of cryogenic liquid gas is obtainable under authorization of said control means (8).

16. A system comprising a device (1) for dispensing cryogenic liquid gases (7) according to any claim from 1 to 8, and the receiving container (4).

## Patentansprüche

1. Eine Vorrichtung (1) zum Abgeben von tiefkalten Flüssiggasen (7), umfassend eine Quelle (2) von tiefkaltem Flüssiggas, Zuführmittel (3, 12) zum Zuführen einer ausgewählten Menge des tiefkalten Flüssiggases in einen Aufnahmebehälter (4), eine Messeinrichtung (6), die zum Messen der Menge an tiefkaltem Flüssiggas in dem Aufnahmebehälter (4) konfiguriert ist, **dadurch gekennzeichnet, dass** die Zuführmittel (3, 12) konfiguriert sind, das tiefkalte Flüssiggas dem Aufnahmebehälter (4) zuzuführen, der offen ist und Umgebungsdruck unterliegt; und
dass die Vorrichtung weiterhin umfasst:
eine verschließbare Kammer (5), die konfiguriert ist, den Aufnahmebehälter (4) und mindestens einen Teil der Zuführmittel (3, 12), die Messeinrichtung (6) und eine Steuerungseinrichtung (8), die zum Steuern mindestens der Zufuhr von tiefkaltem Flüssiggas zu dem Aufnahmebehälter (4) und zum Unterbrechen der Zufuhr von tiefkaltem Flüssiggas konfiguriert ist, sobald die zuvor gewählte Menge von tiefkaltem Flüssiggas abgegeben wurde, aufzunehmen, wobei die Vorrichtung weiterhin Verschlussmittel (14) für die verschließbare Kammer (5) aufweist, die konfiguriert sind, den Durchtritt des Aufnahmebehälters (4) zu erlauben, wenn die Kammer (5) geöffnet ist.

2. Eine Vorrichtung gemäß Anspruch 1, wobei die Zuführmittel (3, 12) ausgestaltet sind, so dass, während des Schrittes der Zuführung des tiefkalten Flüssiggases in den Aufnahmebehälter (4), die Zuführmittel (3, 12) zum Zuführen des tiefkalten Flüssiggases zu dem Aufnahmebehälter (4) physikalisch von dem Aufnahmebehälter gelöst werden.

3. Eine Vorrichtung gemäß Anspruch 1 oder 2, wobei die Messeinrichtung (6) des tiefkalten Flüssiggases mindestens einen Maßstab umfasst.

4. Eine Vorrichtung gemäß Anspruch 3, bei der der Maßstab in der verschließbaren Kammer (5) untergebracht ist.

5. Eine Vorrichtung gemäß irgendeinem vorhergehenden Anspruch, wobei die Kammer (5) einen Sensor (9) zum Erfassen einer Sauerstoffkonzentration und/oder einen Sensor (10) zum Erfassen einer Temperatur innerhalb der Kammer (5) aufweist.

6. Eine Vorrichtung gemäß irgendeinem vorhergehenden Anspruch, umfassend Mittel zum Identifizieren des Aufnahmebehälters (4) und/oder der Quelle (2) von tiefkaltem Flüssiggas.

7. Eine Vorrichtung gemäß irgendeinem vorhergehenden Anspruch, wobei die Zuführmittel (3, 12) eine Düse (12) umfassen, die innerhalb des Aufnahmebehälters (4) und der Kammer (5) bewegbar ist.

8. Eine Vorrichtung gemäß Anspruch 1, umfassend zwei oder mehr Quellen (2) von tiefkaltem Flüssiggas und/oder zwei oder mehr verschließbare Kammern (5), die konfiguriert sind, die Aufnahmebehälter (4) aufzunehmen.

9. Ein Verfahren zur Abgabe von tiefkalten Flüssiggasen an einen Aufnahmebehälter (4) mittels einer Vorrichtung (1), die eine Quelle (2) von tiefkaltem Flüssiggas, Zuführmittel (3, 12) zum Zuführen einer ausgewählten Menge des tiefkalten Flüssiggases zu dem Aufnahmebehälter (4), und eine Messeinrichtung (6) enthält, die zum Messen der Menge an tiefkaltem Flüssiggas in dem Aufnahmebehälter (4) konfiguriert ist, **dadurch gekennzeichnet, dass** der Aufnahmebehälter ein bei Umgebungsdruck offener Aufnahmebehälter (4) ist, wobei die Vorrichtung (1) weiterhin eine verschließbare Kammer (5) umfasst, die konfiguriert ist, den Aufnahmebehälter (4), die Messeinrichtung (6) und eine Steuerungseinrichtung (8) zum Steuern der Zufuhr von tiefkaltem Flüssiggas zu dem Aufnahmebehälter (4) und Unterbrechen der Zufuhr von tiefkaltem Flüssiggas, sobald die zuvor gewählte Menge von tiefkaltem Flüssiggas abgegeben wurde, aufzunehmen, und Verschlussmittel (14) für die verschließbare Kammer (5), die konfiguriert sind, den Durchtritt des Aufnahmebehälters (4) zu erlauben, wenn die Kammer (5) geöffnet ist, wobei das Verfahren mindestens die folgenden Schritte umfasst:
(i) Bereitstellen eines Aufnahmebehälters (4) in der Kammer (5);
(ii) Auswählen einer Menge an tiefkaltem Flüssiggas, die in den Aufnahmebehälter (4) geliefert werden soll;
(iii) Zuführen einer Menge von tiefkaltem Flüssiggas von der Quelle (2) durch die Zuführmittel (3, 12) zu dem Aufnahmebehälter (4), wobei der Aufnahmebehälter (4) offen ist und Umgebungsdruck unterliegt;
(iv) Messen der Menge an tiefkaltem Flüssiggas, das dem Aufnahmebehälter (4) zugeführt wurde;
(v) Unterbrechen der Zuführung von tiefkaltem Flüssiggas, sobald die zuvor ausgewählte Menge dem Aufnahmebehälter (4) zugeführt wurde.

10. Ein Verfahren gemäß Anspruch 9, wobei in Schritt iii) die Zuführmittel (3, 12) physikalisch von dem Aufnahmebehälter (4) gelöst werden.

11. Ein Verfahren gemäß Anspruch 9 oder 10, wobei die Zuführmittel (3, 12) eine Düse (12) aufweisen und wobei vor dem Zuführschritt (iii) die Düse (12) der Zuführmittel (3, 12) in den Aufnahmebehälter (4) eingeführt und nahe am Boden des Aufnahmebehälters (4) positioniert wird.

12. Ein Verfahren gemäß irgendeinem der Ansprüche 9 bis 11, wobei ein Sauerstoffsensor (9) die Sauerstoffkonzentration in der Kammer (5) prüft und die Kammer (5) entlüftet wird, wenn die Sauerstoffkonzentration innerhalb der Kammer (5) niedriger ist als ein gespeicherter Sauerstoffschwellenwert.

13. Ein Verfahren gemäß irgendeinem der Ansprüche 9 bis 12, wobei ein Temperatursensor (10) die Temperatur innerhalb der Kammer (5) prüft und das Zuführen von tiefkaltem Flüssiggas in den Aufnahmebehälter (4) unterbrochen wird, wenn die erfasste Temperatur niedriger als ein gespeicherter Temperaturschwellenwert ist.

14. Ein Verfahren gemäß irgendeinem der Ansprüche 9 bis 13, wobei die Verschlussmittel (14) eine Tür aufweisen, und die Steuerungseinrichtung (8) das Öffnen der Tür der Kammer (5) blockiert, wenn sich die erfassten Kammerparameter von den gespeicherten Parametern unterscheiden.

15. Ein Verfahren gemäß irgendeinem der Ansprüche 9 bis 14, wobei die Steuereinheit (8) mit Mitteln zum Verifizieren der Art/Identität von einer oder mehreren von der Quelle (2), des Nutzer, der Bedienperson zur Wartung ausgestattet ist, und wobei der Zugang zu der Quelle (2) von tiefkaltem Flüssiggas unter Genehmigung der Steuereinrichtung (8) erhältlich ist.

16. Ein System enthaltend die Vorrichtung (1) zum Abgeben von tiefkalten Flüssiggasen (7) gemäß irgendeinem der Ansprüche 1 bis 8 und den Aufnahmebehälter (4).

## Revendications

1. Dispositif (1) pour distribuer des gaz liquides cryogéniques (7), comprenant une source (2) de gaz cryogénique liquide, un moyen d'alimentation (3, 12) pour fournir une quantité sélectionnée dudit gaz cryogénique liquide à un conteneur de réception (4), un moyen de mesure (6) configuré pour mesurer la quantité de gaz cryogénique liquide dans ledit conteneur de réception (4), **caractérisé en ce que** ledit moyen d'alimentation (3, 12) est configuré pour fournir ledit gaz cryogénique liquide audit conteneur de réception (4) qui est ouvert et à pression ambiante ; et **en ce que** ledit dispositif comprend en outre :
une chambre fermable (5) configurée pour loger ledit conteneur de réception (4) et au moins une partie dudit moyen d'alimentation (3, 12), ledit moyen de mesure (6) et des moyens de commande (8) configurés pour commander au moins l'alimentation en gaz cryogénique liquide dudit conteneur de réception (4) et l'interruption de ladite alimentation en gaz cryogénique liquide une fois que la quantité de gaz cryogénique liquide précédemment sélectionnée a été délivrée,
le dispositif comprenant en outre un moyen de fermeture (14) pour ladite chambre fermable (5) configuré pour permettre le passage dudit conteneur de réception (4) lorsque ladite chambre (5) est ouverte.

2. Dispositif selon la revendication 1, dans lequel ledit moyen d'alimentation (3, 12) est configuré pour que, au cours de l'étape d'alimentation du gaz cryogénique liquide au conteneur de réception (4), le moyen d'alimentation (3, 12) pour fournir le gaz cryogénique liquide au conteneur de réception (4) soit physiquement détaché dudit conteneur de réception (4).

3. Dispositif selon la revendication 1 ou 2, dans lequel ledit moyen de mesure (6) du gaz cryogénique liquide comprend au moins une échelle.

4. Dispositif selon la revendication 3, dans lequel ladite échelle est logée dans ladite chambre fermable (5).

5. Dispositif selon l'une quelconque des revendications précédentes, dans lequel ladite chambre (5) comprend un capteur (9) pour détecter une concentration d'oxygène et/ou un capteur (10) pour détecter une température dans la chambre (5).

6. Dispositif selon l'une quelconque des revendications précédentes, comprenant un moyen pour identifier ledit conteneur de réception (4) et/ou ladite source (2) de gaz cryogénique liquide.

7. Dispositif selon l'une quelconque des revendications précédentes, dans lequel ledit moyen d'alimentation (3, 12) comprend une buse (12) qui est mobile dans le conteneur de réception (4) et la chambre (5).

8. Dispositif selon la revendication 1, comprenant deux sources (2) ou plus de gaz cryogénique liquide et/ou deux pièces fermables (5) ou plus configurées pour loger lesdits conteneurs de réception (4).

9. Procédé de distribution de gaz cryogénique liquide à un conteneur de réception (4) au moyen d'un dispositif (1) comprenant une source (2) de gaz cryogénique liquide, un moyen d'alimentation (3, 12) pour fournir une quantité sélectionnée dudit gaz cryogénique liquide audit conteneur de réception (4), un moyen de mesure (6) configuré pour mesurer la quantité de gaz cryogénique liquide dans ledit conteneur de réception (4), **caractérisé en ce que** ledit conteneur de réception (4) est un conteneur de réception ouvert (4) à pression ambiante, ledit dispositif (1) comprenant en outre une chambre fermable (5) configurée pour loger ledit conteneur de réception (4), ledit moyen de mesure (6) et le moyen de commande (8) pour commander l'alimentation en gaz cryogénique liquide audit conteneur de réception (4) et l'interruption de ladite alimentation en gaz cryogénique liquide une fois que la quantité précédemment sélectionnée de gaz cryogénique liquide a été délivrée, et un moyen de fermeture (14) pour ladite chambre fermable (5) configuré pour permettre le passage dudit conteneur de réception (4) lorsque ladite chambre (5) est ouverte, ledit procédé comprenant au moins les étapes suivantes consistant à :
(i) fournir un conteneur de réception (4) dans ladite chambre (5),
(ii) sélectionner une quantité de gaz cryogénique liquide à délivrer audit conteneur de réception (4) ;
(iii) fournir une quantité de gaz cryogénique liquide de ladite source (2) à travers ledit moyen d'alimentation (3, 12) audit conteneur de réception (4), dans lequel ledit conteneur de réception (4) est ouvert et à pression ambiante ;
(iv) mesurer la quantité de gaz cryogénique liquide fournie audit conteneur de réception (4) ;
(v) interrompre ladite alimentation en gaz cryogénique liquide une fois que la quantité précédemment sélectionnée a été délivrée audit conteneur de réception (4).

10. Procédé selon la revendication 9, dans lequel, à l'étape iii), ledit moyen d'alimentation (3, 12) est physiquement détaché dudit conteneur de réception (4).

11. Procédé selon la revendication 9 ou 10, dans lequel ledit moyen d'alimentation (3, 12) a une buse (12) et dans lequel, avant ladite étape d'alimentation (iii), ladite buse (12) dudit moyen d'alimentation (3, 12) est insérée dans ledit conteneur de réception (4) et positionnée à proximité du fond dudit conteneur de réception (4).

12. Procédé selon l'une quelconque des revendications 9 à 11, dans lequel un capteur d'oxygène (9) commande la concentration d'oxygène dans la chambre (5) et ladite chambre (5) est ventilée si la concentration d'oxygène à l'intérieur de la chambre (5) est inférieure à une valeur de seuil d'oxygène mémorisée.

13. Procédé selon l'une quelconque des revendications 9 à 12, dans lequel un capteur de température (10) commande la température dans la chambre (5), et la fourniture de gaz cryogénique liquide audit conteneur de réception (4) est interrompue si la température captée est inférieure à une valeur de seuil de température mémorisée.

14. Procédé selon l'une quelconque des revendications 9 à 13, dans lequel le moyen de fermeture (14) comprend une porte, et ledit moyen de commande (8) bloque l'ouverture de la porte de ladite chambre (5) lorsque les paramètres de chambre détectés sont différents desdits paramètres mémorisés.

15. Procédé selon l'une quelconque des revendications 9 à 14, dans lequel l'unité de commande (8) est pourvue d'un moyen pour vérifier la nature/identité d'un(e) ou plus de la source (2), de l'utilisateur, de l'opérateur assurant l'entretien, et l'accès à ladite source (2) de gaz cryogénique liquide peut être obtenu avec l'autorisation dudit moyen de commande (8).

16. Système comprenant un dispositif (1) pour distribuer des gaz cryogéniques liquides selon l'une quelconque des revendications 1 à 8, et le conteneur de réception (4).
